# FASCICULE DE BREVET EUROPEEN

(11) **EP 2 791 749 B1**
(45) Date de publication et mention de la délivrance du brevet: **25.07.2018**
(21) Numéro de dépôt: 12795479.0
(22) Date de dépôt: 06.12.2012
(51) Int. Cl.: G05D 1/00, G05D 1/02, E04H 6/42

(54) **COMMANDE DU MODE AUTONOME DE VEHICULES BI-MODAUX**
STEUERUNG DER AUTONOMEN MODUS VON BIMODALEN FAHRZEUGEN
CONTROL OF THE AUTONOMOUS MODE OF BIMODAL VEHICLES

(30) Priorité: 16.12.2011 FR 1161773
(43) Date de publication de la demande: 22.10.2014
(73) Titulaire: Renault S.A.S., 92100 Boulogne-Billancourt (FR)
(72) Inventeur: IBANEZ-GUZMAN, Javier, 78125 Raizeaux (FR); MINOIU-ENACHE, Nicoleta, 78000 Versailles (FR); CHALE GONGORA, Hugo Guillermo, 92320 Chatillon (FR); LESAING, Jean, 91430 Igny (FR); CHAUVEAU, François, 78720 Dampierre (FR)
(86) Numéro de dépôt international: PCT/EP2012/074676
(87) Numéro de publication internationale: WO 2013/087514

(56) Documents cités:
- US-B1- 6 181 991
- US-B1- 6 336 295
- US-B1- 8 078 349

## Description

L'invention se rapporte au domaine technique des véhicules autonomes terrestres (« Autonomous Unmanned Ground Vehicules » en anglais).

Plusieurs études ont été poursuivies dans les dernières années pour démontrer la faisabilité de la conduite automatisée en se basant sur des solutions techniques de pointe.

Des véhicules ont été développés afin de permettre une conduite sans conducteur. Ces véhicules comprennent une interface utilisateurs permettant au passager de saisir une adresse de destination, des moyens de localisation basés sur les récepteurs type GPS, un ensemble de capteurs apte à fournir suffisamment d'informations sur l'environnement immédiat du véhicule, et des moyens de traitement de données reçues pour gérer la conduite de façon à arriver à la destination. Ces véhicules permettent ainsi à une personne ne sachant pas ou ne désirant pas conduire d'être amenée d'un point à un autre selon son souhait.

Par exemple, le document US8078349 divulgue des procédés et dispositifs pour passer d'un mode de conduite humaine à un mode autonome de conduite de véhicule en amenant le véhicule sur une position prédéterminée à partir de laquelle il peut ensuite se déplacer de manière autonome.

Le document US2010/250023 divulgue un système et un procédé pour faire fonctionner une machine sélectivement dans un mode manuel, dans un mode télécommandé et dans un mode autonome.

Le document US5774069 divulgue une unité de contrôle de conduite automatique qui peut commuter un véhicule d'un mode automatique à un mode manuel en un point déterminé.

Les documents US6336295 et US6181991 sont relatifs à un entrepôt de véhicules partagés pour ranger et délivrer un véhicule restitué ou emprunté par un utilisateur, en déplaçant de manière automatique le véhicule entre sa place de stationnement et l'entrée ou la sortie de l'entrepôt jusqu'à laquelle l'utilisateur doit se déplacer.

Il existe néanmoins un besoin pour un procédé et un dispositif qui soient plus en adéquation avec les besoins de la plupart des utilisateurs.

Il est proposé un procédé de contrôle d'au moins un véhicule terrestre autonome apte à adopter deux modes de fonctionnement, lesdits modes comprenant :
- un mode manuel, dans lequel la conduite est fonction de commandes conducteur du véhicule, par exemple des commandes manuelle de rotation de volant, d'appui pédale de frein, etc., et
- un mode autonome, dans lequel la conduite est fonction de données reçues de capteurs aptes à fournir des informations sur l'environnement du véhicule et de données reçues d'un système de navigation.

Le procédé comprend une étape consistant à autoriser le mode autonome seulement lorsque le véhicule se trouve dans un site déterminé.

Cette étape peut être effectuée au sein du véhicule, ou bien encore par un serveur distant.

Ainsi, le véhicule peut fonctionner de façon automatisée lorsqu'il se trouve sur un site donné, par exemple un campus ou un espace dédié à la location de voitures.

Le véhicule est également apte à fonctionner en mode manuel. Ainsi, le conducteur est amené à conduire le véhicule afin d'effectuer des déplacements utiles. Les déplacements au sein du site peuvent être effectués alors que le véhicule est sans passagers. Ces déplacements au sein du site peuvent ainsi être en quelques sortes transparents pour l'utilisateur.

Le procédé peut avantageusement comprendre, lorsque le véhicule est en mode autonome, la transmission vers le véhicule d'un message de consigne afin que le véhicule réalise de façon autonome un déplacement correspondant à ce message de consigne. Le message de consigne peut ainsi définir une mission à effectuer.

En mode autonome, le véhicule reçoit un message de consigne par exemple d'un serveur distant. Par exemple, dans un premier temps, le véhicule reçoit un ordre de mission qui détermine la façon dans laquelle celui-ci va opérer une fois qu'il se trouve en mode autonome et qui inclut des informations sur le conducteur qui prendra en charge le véhicule en mode manuel. Ce message est envoyé d'un serveur qui gère les missions des véhicules autonomes.

Le message de consigne peut par exemple comprendre une adresse de destination. Le véhicule se déplace alors de façon autonome, en utilisant ses ressources du type capteur et récepteur GPS, jusqu'à l'emplacement correspondant à cette adresse.

On peut prévoir de transmettre un ordre de mission comprenant plusieurs messages de consigne, fournissant des informations comme une adresse de destination, une date du déplacement, une heure de rendez-vous, une valeur de charge minimale stockée dans les batteries du véhicule (si celui-ci est électrique), le nom et les données de l'utilisateur, des informations sur le trafic sur le site ou des informations concernant un profil de circuit à traverser par le véhicule en mode autonome, etc. Le contenu de la mission peut être décodé au bord du véhicule, de façon que ce véhicule puisse remplir un ensemble de tâches en mode autonome ainsi que faciliter la prise en main lors du passage en mode manuel. Le véhicule se déplace alors de façon autonome, en utilisant des ressources du type capteur extéroceptif et récepteur GPS, jusqu'à l'emplacement correspondant à l'adresse de destination reçue.

L'invention n'est en rien limitée par la forme du message de consigne ni par son contenu, pourvu que ce message permette de déclencher le déplacement du véhicule. Par exemple, le message de consigne peut comprendre des indications afin d'imposer un itinéraire donné, une valeur de paramètre indicatif de l'importance du déplacement, ou autre.

Avantageusement et de façon non limitative, le procédé peut en outre comprendre une étape de réception de données de réservation issues d'une interface utilisateur. Le message de consigne est élaboré en fonction des données de réservation reçues.

Ainsi le serveur imposant au véhicule ses déplacements peut être en communication avec une interface utilisateur du type terminal, par exemple une borne de réservation, un ordinateur personnel, un téléphone intelligent (« smartphone » en anglais), ou autre. L'utilisateur potentiel saisit une demande de réservation avec une date de réservation souhaitée, et éventuellement un lieu de rendez-vous souhaité. Le message de consigne est élaboré à partir des données saisies par l'utilisateur.

Par exemple, le procédé peut comprendre une étape de détermination de l'adresse de destination en fonction des données de réservation reçues.

Par exemple, un serveur gère un parc de plusieurs véhicules sur un site déterminé. Un utilisateur effectue une demande de réservation en saisissant un lieu de rendez-vous souhaité, au sein du site, et une date de rendez-vous souhaitée. A partir de ces données, le serveur sélectionne un véhicule du parc, génère une date d'envoi de message et une adresse de destination. A la date d'envoi ainsi générée, le serveur transmet un message vers le véhicule sélectionné, ce message transportant l'adresse de destination, par exemple des coordonnées d'un système de navigation.

Selon un autre exemple, le message peut être envoyé vers le véhicule dès que la date et l'adresse de rendez-vous sont déterminées. Le véhicule reçoit un message avec une date et une adresse, conserve ces données, et lorsque la date approche, par exemple une demi-heure avant la date, se déplace de façon autonome jusqu'à l'emplacement correspondant à l'adresse.

L'invention n'est pas limitée par la forme de l'adresse de destination : il peut par exemple s'agir de données de navigation, d'un indicatif d'un emplacement dont les coordonnées géographiques sont préenregistrées, ou autre.

On peut prévoir que le site ne comporte qu'un seul emplacement de rendez-vous, auquel cas la détermination de l'adresse de destination suite à une demande de réservation est triviale. Où que soit le véhicule sur le site, il reçoit un message du serveur lui imposant de se rendre au lieu de rendez-vous.

Avantageusement et de façon non exhaustive, le procédé peut en outre comprendre une étape de détection d'un éventuel problème.

En cas de détection, le procédé peut comprendre une étape d'émission d'un signal d'alarme et/ou une étape d'envoi d'au moins un message afin d'assister le véhicule, par exemple une étape d'envoi d'un message pour interdire au véhicule tout déplacement. Cet envoi peut être effectué du serveur vers le véhicule.

Avantageusement et de façon non exhaustive, le procédé peut comprendre en outre la réception d'au moins une information d'état du véhicule autonome. Cette information peut être issue du véhicule et reçue par le serveur.

Le message de consigne peut être élaboré en fonction de cette au moins une information reçue.

Par exemple, les informations reçues peuvent comprendre un état de charge de la batterie, notamment si le véhicule est équipé d'une batterie de traction, ou bien encore une valeur de paramètre caractérisant l'usure des freins. Selon les informations reçues, on peut imposer au véhicule de se rendre à une borne de recharge, ou bien au garage, afin de remplacer les plaquettes de freins.

Ce procédé permet ainsi d'éviter aux utilisateurs humains de se charger d'au moins certaines des opérations de maintenance. Le véhicule se déplace de lui-même vers les bornes de recharge, au garage ou autre, de sorte qu'au moins certaines des opérations de maintenance de véhicule deviennent transparentes pour l'utilisateur.

Avantageusement et de façon non exhaustive, on peut prévoir que le véhicule affiche un message permettant au garagiste d'effectuer l'opération adéquate, par exemple « rajouter de l'huile », ou bien encore « nettoyage à effectuer ».

Avantageusement et de façon non exhaustive, le procédé peut permettre de gérer une pluralité de véhicules autonomes.

Avantageusement et de façon non exhaustive, le procédé peut en outre comprendre une étape d'estimation d'une répartition spatiale de la pluralité de véhicules. Cette étape peut être effectuée en fonction de données saisies issues d'au moins une interface utilisateur et/ou en fonction de données statistiques établies.

Le procédé peut comprendre en outre une étape d'émission d'au moins un message de consigne à destination d'au moins un véhicule, en fonction de la répartition estimée.

Le serveur peut générer le message de consigne en fonction de la répartition estimée et transmettre ce message au véhicule autonome.

Cette répartition peut être estimée en fonction des besoins réels, tels que reçus d'une ou plusieurs interfaces utilisateurs, et/ou supposés. Par exemple, pour un parc de véhicules autonomes, des données statistiques d'utilisation peuvent être exploitables pour déterminer qu'à telle heure de la journée tel nombre de véhicules sera nécessaire à tel endroit. Le procédé peut ainsi permettre d'assurer une gestion de flotte.

Il est en outre proposé un produit programme d'ordinateur comportant des instructions pour effectuer les étapes du procédé décrit ci-dessus lorsque le programme est exécuté par un processeur. Ces instructions peuvent par exemple être programmées dans un processeur, par exemple un microprocesseur, un microcontrôleur, un DSP (de l'anglais « Digital Signal Processor »), ou autre.

Il est en outre proposé un dispositif de contrôle d'au moins un véhicule autonome, et avantageusement d'une pluralité de véhicules autonomes, chaque véhicule autonome étant apte à adopter deux modes de fonctionnement, ces modes comprenant :
- un mode manuel, dans lequel la conduite est fonction de commandes conducteur du véhicule, et
- un mode autonome, dans lequel la conduite est fonction de données reçues de capteurs aptes à fournir des informations sur l'environnement du véhicule et de données reçues d'un système de navigation.

Le dispositif comporte des moyens de traitement agencés pour autoriser le mode autonome seulement lorsque le véhicule se trouve dans un site déterminé.

Ce dispositif peut ainsi permettre de mettre en oeuvre le procédé décrit ci-dessus.

Ce dispositif peut comprendre en outre des moyens de transmission pour transmettre un message de consigne afin que le véhicule réalise de façon autonome un déplacement correspondant à ce message de consigne.

Dans le cas d'un dispositif de contrôle distant, la communication entre le ou les véhicule(s) autonome(s) et le dispositif de contrôle peut être assurée par des moyens de communication sans fil à courte, moyenne ou longue distance. On peut par exemple prévoir d'utiliser des réseaux du type réseaux de téléphonie, internet et/ou autre pour assurer la communication.

Avantageusement et de façon non limitative, le dispositif de contrôle peut comprendre des moyens de réception, par exemple un récepteur radio, un port d'entrée, ou autre, pour recevoir au moins une information d'état du véhicule.

Le dispositif de contrôle peut comprendre des moyens de traitement agencés pour élaborer un message de consigne destiné au véhicule en fonction de la ou des information(s) reçue(s).

Avantageusement et de façon non limitative, le dispositif de contrôle peut être situé à distance du véhicule.

Avantageusement et de façon non limitative, le dispositif de contrôle peut être agencé pour recevoir des données d'une pluralité de véhicules autonomes et pour superviser chaque véhicule de cette pluralité de véhicules autonomes. La gestion de cette pluralité de véhicules autonomes est ainsi centralisée. Pour chaque véhicule, le dispositif de contrôle détermine en fonction des informations reçues de ce véhicule si le véhicule doit effectuer certains déplacements à des fins de maintenance. En outre prévoir un seul dispositif de contrôle pour un parc de véhicules donné permet d'économiser du matériel.

Avantageusement et de façon non limitative, des moyens de traitement du dispositif de contrôle peuvent être agencés de façon à estimer une répartition de cette pluralité de véhicules, et à transmettre à au moins certains des véhicules de cette pluralité des commandes des messages de consigne de façon à réaliser ou à s'approcher de la répartition estimée.

Avantageusement et de façon non limitative, les moyens de traitement du dispositif de contrôle peuvent être agencés de façon à détecter un éventuel problème, et à émettre un signal d'alarme en cas de détection de problème et/ou au moins un message vers le véhicule afin d'assister le véhicule. Si le problème détecté est un dysfonctionnement du véhicule lui-même, par exemple une absence de démarrage, alors on peut prévoir une étape d'émission d'une alarme.

Par exemple, pour chaque véhicule autonome le dispositif de contrôle peut recevoir des informations de gestion et de vitesse de ce véhicule autonome ; le dispositif de contrôle peut comparer les informations de position reçues à divers instants ; s'il s'avère que la disposition du véhicule n'évolue pas, alors que le véhicule devrait être en déplacement, une alarme peut être émise afin qu'un technicien se déplace et effectue un diagnostic humain ou qu'une procédure embarquée dans le véhicule soit déclenchée.

L'alarme peut être visuelle, sonore et/ou autre.

Le dispositif de contrôle peut par exemple être agencé pour recevoir une information de vitesse du véhicule et comparer cette valeur de vitesse à un seuil de vitesse maximale. Si la valeur de vitesse reçue dépasse la valeur maximale, le dispositif de contrôle peut émettre un message commandant au véhicule de rester immobile ou de se garer à un emplacement déterminé.

On peut prévoir qu'en cas de détection de problème, le dispositif de contrôle impose au véhicule de rester immobile. Dans ce cas, le dispositif de contrôle peut par exemple transmettre au véhicule une adresse de destination dont les données de localisation correspondent à une position proche de celle où se trouvait le véhicule au moment de la détection du problème.

L'invention peut avantageusement impliquer l'utilisation de règles de comportement associées à une représentation numérique du parcours des véhicules stockée dans le dispositif de contrôle de leur comportement. Celles-ci permettent par exemple d'imposer des contraintes de comportement aux véhicules autonomes selon la zone dans laquelle ils évoluent, telle qu'une zone de chargement où les véhicules doivent circuler à vitesse réduite.

Avantageusement et de façon non limitative le dispositif de contrôle peut être en communication avec une interface utilisateur.

Ainsi, le dispositif de contrôle peut prendre en compte les souhaits de l'utilisateur dans la supervision du ou des véhicules. Par exemple, l'utilisateur peut effectuer une demande de réservation de véhicule via l'interface utilisateur.

Le dispositif de contrôle peut avantageusement permettre de gérer non seulement un véhicule autonome, les autres véhicules d'un parc donné, mais en outre des équipements du site en communication avec le dispositif de contrôle, par exemple des capteurs installés sur le site. On parle alors d'écosystème.

Le dispositif de contrôle peut par exemple comprendre :
- des moyens de détection de l'état de l'écosystème du véhicule,
- des moyens de traitement pour élaborer en fonction des données reçues des moyens de détection des messages de consigne afin que le véhicule se déplace de façon sûre en mode autonome.

Le dispositif de contrôle peut avantageusement comprendre des moyens d'enregistrement et de compilation des informations relatives à l'écosystème et au comportement du véhicule afin d'obtenir des données statistiques, pour permettre l'apprentissage du dispositif de contrôle et l'adaptation de règles de comportement aux conditions réelles d'utilisation des véhicules.

L'invention peut trouver de nombreuses applications. Par exemple, le dispositif de contrôle peut équiper un véhicule autonome appartenant à un particulier, afin de permettre à cette personne d'éviter de se charger elle-même des déplacements non-utiles, du type déplacement à des fins de maintenance ou de parking. Ce particulier peut éventuellement être une personne dépendante.

On peut par exemple prévoir une application du type taxi. Un utilisateur commande, par exemple depuis un terminal de téléphonie mobile, un véhicule à une adresse et à une date donnée. Le terminal mobile transmet ces données au dispositif de contrôle, lequel émet un message de consigne de sorte que le véhicule se déplace de façon autonome pour être disponible à la date et au lieu souhaité.

Le dispositif de contrôle est en communication, via des moyens de communication sans fil, avec un parc de véhicules sur un site déterminé, c'est-à-dire avec des frontières définies. Ces frontières peuvent être matérialisées, par exemple par des barrières, ou non.

Le dispositif de contrôle peut se charger de répartir les différents véhicules en fonction des besoins réels ou supposés, d'assurer la maintenance des divers véhicules, et de signaler à une personne autorisée les éventuels problèmes détectés.

Le dispositif de contrôle est ainsi agencé pour superviser un certain nombre de déplacements destinés à être effectués alors que le véhicule est a priori vide. Ces déplacements sont réalisés de façon autonome par le véhicule.

On peut prévoir que lorsqu'un utilisateur monte dans le véhicule, le véhicule passe d'un mode de fonctionnement autonome à un mode de fonctionnement manuel, afin de laisser l'utilisateur conduire le véhicule sur le déplacement utile, ou non. En particulier, dans le cas d'un véhicule destiné à une personne âgée et/ou dépendante, on peut prévoir que le véhicule garde un mode de fonctionnement automatique malgré la présence du passager. Dit autrement le véhicule peut fonctionner de façon bimodale ou non.

Les moyens de traitement peuvent comprendre un coeur de processeur, un processeur, et/ou autre. Les moyens de réception peuvent par exemple comprendre des fils d'entrée, un port d'entrée, un bus d'entrée et/ou autre. Des moyens de communication du véhicule peuvent par exemple comprendre des fils de sorties, des moyens d'émission/ réception sans fil, ou autre. Les moyens de transmission peuvent par exemple comprendre des moyens d'émission/réception sans fil, des fils de sortie ou autre.

Avantageusement et de façon non limitative, le dispositif peut intégrer à la fois:
- un module de supervision pour transmettre les messages de consigne et pour assister les véhicules dans leurs déplacements lorsque lesdits véhicules sont en mode autonome,
- des moyens de communication avec une interface utilisateur pour recevoir des données de réservation issues de ladite interface utilisateur,
- un module de gestion de flotte en communication avec le module de supervision et avec les moyens de communication pour assurer la maintenance des véhicules et/ou pour optimiser la répartition spatiale des véhicules sur le site.

Une telle plate-forme permet ainsi de piloter les véhicules en mode autonome en prenant en compte aussi bien les demandes de réservations que l'état des véhicules.

Les moyens de communication avec l'interface utilisateur peuvent comprendre des moyens de communication sans fil, par exemple une antenne WiFi, ou bien encore un port Ethernet, un bus d'entrée, et/ou autre.

Il est en outre proposé un véhicule terrestre bimodal autonome/manuel comportant des moyens de réception pour recevoir des messages issus d'un dispositif de contrôle tel que décrit ci-dessus, par exemple un véhicule automobile.

Le véhicule autonome peut avantageusement comprendre des moyens de transmission pour envoyer des messages vers le dispositif de contrôle.Les moyens de réception et/ou les moyens de transmission peuvent être sans fil.

Il est en outre proposé un ensemble comprenant au moins un véhicule autonome, et le dispositif de contrôle décrit plus haut. Cet ensemble peut avantageusement comprendre en outre au moins une interface utilisateur.

Le véhicule autonome peut être électrique, hybride ou autre.

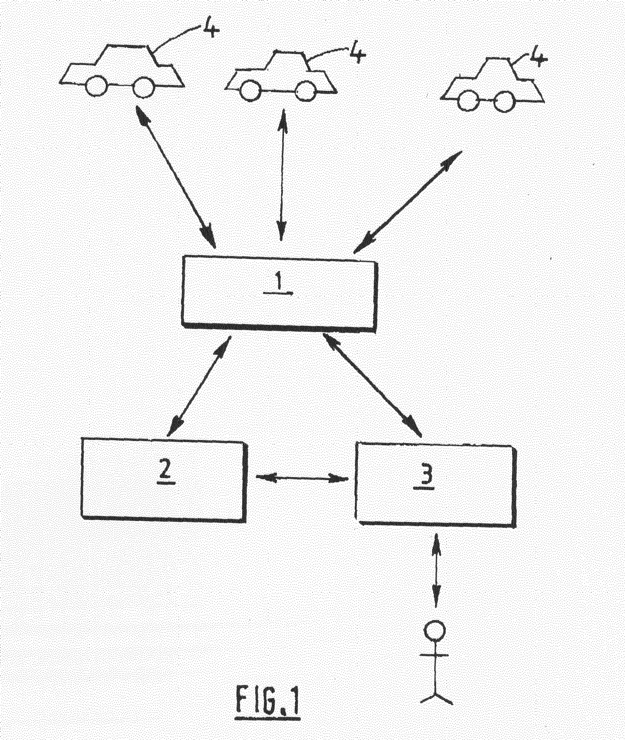

L'invention sera mieux comprise en référence à la figure 1, laquelle montre un schéma bloc d'un exemple de système de véhicules autonomes, selon un mode de réalisation de l'invention.

En référence à la figure 1, un dispositif de contrôle de véhicules autonomes comprend un module de supervision 1 et un module de gestion de flotte 2. Les modules 1, 2 sont en communication avec un système d'interaction utilisateur 3, dit aussi interface utilisateur.

Ce système d'interaction utilisateur peut par exemple comprendre un terminal du type ordinateur, du type téléphone mobile, et/ou autre.

Chaque véhicule 4 est un véhicule bimodal. Dit autrement, le véhicule 4 est capable d'assurer une conduite autonome et est aussi capable d'être conduit manuellement, selon le mode de fonctionnement désiré.

Dans un mode de réalisation, on peut prévoir d'interdire toute activation automatique du véhicule lorsqu'il y a un ou des passagers à bord de ce véhicule.

Dans un autre mode de réalisation, on peut prévoir que la conduite reste automatique, mais que si une opération manuelle est nécessaire, le module de supervision 1 soit apte à forcer le véhicule autonome à commuter vers le mode de conduite manuelle.

### Module de supervision

Le module de supervision 1 est en communication avec un ensemble de véhicules autonomes 4.

Le module de supervision envoie des messages de consigne vers les véhicules 4, afin d'imposer à ces véhicules 4 des déplacements déterminés lorsqu'ils sont en mode autonome.

Egalement, le module 1 reçoit des données issues des véhicules en mode autonome 4.

A titre illustratif, le dispositif de contrôle reçoit des informations de position du véhicule, issues par exemple d'un système de positionnement de type GPS (de l'anglais « Global Positioning System »). Le dispositif de contrôle reçoit en outre une information de vitesse du véhicule, ainsi des informations sur les feux de détresse, l'utilisation des essuie-glaces, l'activation de l'ESP (en anglais « Electronic Stability Programme ») et autres permettent de superviser le comportement des véhicules autonomes. Peuvent en outre être reçues des informations issues de capteurs intégrés au véhicule, par exemple un capteur de niveau d'huile, ou autre, ainsi que des informations issues de processeurs, par exemple des processeurs programmés pour estimer un état d'usure de plaquette des freins, ou autre ; ces informations permettent aussi d'assurer la gestion du véhicule afin d'assurer sa disponibilité.

Le module de supervision ou de surveillance 1 (en anglais « Integrity system ») permet de vérifier lors du démarrage le statut des processus majeurs, afin d'identifier si ces processus sont effectifs.

Des informations d'état des véhicules autonomes sont relevées et/ou déterminées en fonction d'un ensemble de données reçues précédemment. Les informations caractérisant l'état d'un véhicule comprennent la position de ce véhicule, l'orientation du véhicule, la vitesse du véhicule, des éventuels messages d'alerte ou autre. Ces observations sont effectuées en temps réel.

Ces informations d'état sont enregistrées de manière périodique. Les informations d'état du véhicule relevées sont stockées en mémoire.

En outre le module 1 permet d'assister les véhicules dans leurs déplacements en mode autonome.

En particulier, le module de supervision 1 est agencé de façon à détecter certains problèmes, afin d'assurer l'intégrité de l'ensemble des véhicules et du dispositif de contrôle.

Par exemple, le module 1 est agencé pour vérifier la concordance entre une trajectoire effective d'un véhicule et la trajectoire programmée. Pour ce faire, le module 1 reçoit du véhicule 4 des informations de position de ce véhicule, par exemple des valeurs de latitude et de longitude, et vérifie que ces informations de positions s'inscrivent dans un ensemble de données de positions correspondant à la trajectoire programmée. Si le module 1 détecte que le véhicule 4 s'écarte trop de la trajectoire programmée, un signal d'alarme peut être émis, et/ou le module 1 peut envoyer au véhicule concerné 4 un message de requête afin d'obtenir une information quant aux raisons ayant conduit à cette déviation de trajectoire.

Par exemple encore, le module de supervision 1 est équipé pour signaler à distance une présence de véhicule de service d'urgence à proximité du véhicule autonome ou pour signaler à distance une présence d'obstacle obstruant le trajet à parcourir par le véhicule en mode autonome.

Le module 1 est en outre agencé de façon à vérifier que certaines règles, par exemple des règles relatives aux distances de sécurité entre véhicules ou autre sont bien respectées. En cas de violation des règles, ou bien si une autre anomalie apparaît, des processus de sécurité sont mis en route pour assurer la sécurité des entités et l'intégrité globale du système.

La mise en route de ces processus de sécurité peut entraîner l'envoi de nouvelles consignes au véhicule autonome, de façon à assurer la réussite de la mission originale, ou bien pour résoudre un problème de sécurité.

Les messages de consigne émis peuvent par exemple véhiculer des adresses de destination à atteindre, des valeurs de vitesse à ne pas dépasser, ou autre.

Le module de supervision 1 peut en outre être en communication avec des équipements, par exemple des caméras de vidéo surveillance non représentées, installés sur un site par exemple, ou venant d'autres véhicules, autonomes ou non. Ces informations permettent d'observer le trajet qui doit être suivi par les véhicules autonomes. Le module 1 peut exploiter les informations reçues de ces équipements. Les informations issues de ces équipements peuvent par exemple permettre de déterminer si les routes définies initialement sont de fait utilisables ou non.

Ces équipements d'observation peuvent en outre fournir des informations permettant d'assister les véhicules autonomes lors de l'exécution de manoeuvres complexes. Par exemple, si une route est bloquée par un véhicule stationné, les capteurs embarqués dans les véhicules autonomes peuvent s'avérer insuffisants pour fournir l'information nécessaire à la réalisation d'une manoeuvre de dépassement. Dans ce cas, les informations issues des caméras de surveillance peuvent permettre de générer, au sein du module de supervision 1, des informations pour faciliter la planification des trajectoires du véhicule autonome. Dit autrement, le champ de vue du véhicule peut être élargi par des informations fournies par des capteurs présents dans l'infrastructure.

Les décisions relatives à la conduite sont effectuées en fonction des informations issues des capteurs embarqués dans le véhicule, et en fonction des informations éventuellement fournies par les caméras de surveillance. Les décisions de manoeuvre sont prises localement, par des moyens de traitement du véhicule autonome.

Les informations d'état du véhicule du type position, orientation, vitesse ou autre sont enregistrées dans une mémoire du module 1, et compilées de manière périodique afin d'obtenir des données statistiques et permettre un apprentissage de l'écosystème des véhicules. Ces données statistiques peuvent permettre d'améliorer le flux d'information et la réponse du module 1. Par exemple, ces données peuvent permettre d'établir une vitesse moyenne de déplacement préconisée à certains endroits.

Le module de supervision 1 peut en outre permettre à un observateur de déplacer un véhicule autonome à distance pour des manoeuvres en cas d'urgence, en utilisant des techniques de navigation de point de report en point de report (« waypoint navigation » en anglais). Le module 1 envoie successivement au véhicule des messages de consigne, chaque message de consigne indiquant un point de report donné en tant qu'adresse de destination. Le véhicule est ainsi amené à effectuer la manoeuvre correspondant à cette succession de points de reports.

### Module de gestion de flotte

Le module de gestion de flotte 2 comprend un serveur non représenté comprenant une mémoire non représentée pour stocker une base de données. Ce module 2 permet d'assurer la logistique des véhicules autonomes 4 en gérant la recharge des batteries, le stockage, le parking et l'utilisation des véhicules 4.

Ce module 2 peut permettre d'assurer l'optimisation d'un parc de véhicules autonomes, et leur disponibilité pour les utilisateurs.

Pour chaque véhicule 4, des paramètres relatifs à ce véhicule sont stockés dans la base de données. Ces paramètres peuvent inclure des informations dynamiques, telles que des missions, un état de charge des batteries, un planning d'utilisation et ou autre. Certains de ces paramètres peuvent être reçus du module 1, par exemple un état de charge de batterie mesuré par le véhicule lui-même, ou bien une position effective du véhicule.

Le module 2 reçoit en outre des demandes de réservation issues de l'interface utilisateur 3.

La charge de batterie nécessaire pour assurer une mission annoncée par l'utilisateur est calculée en fonction du profil de la route, des embouteillages prévisibles et de la météo prévisible (pour permettre d'embarquer l'énergie nécessaire au confort thermique dans l'habitacle).

La mise en recharge des véhicules peut aussi être pilotée par la tarification dynamique du fournisseur d'électricité ou toute autre contrainte.

Le module 2 est en outre agencé pour conserver en mémoire des données de réservation anciennes et établir des statistiques à partir de ces demandes de réservations anciennes. Le module 2 peut ainsi estimer une répartition des véhicules correspondant à une estimation de l'ensemble des demandes de réservation futures. Le module 2 effectue par exemple une lecture de données statistiques issues de réservations antérieures.

Le module 2 est ainsi agencé pour choisir, en fonction de plusieurs paramètres, dont les demandes de réservations courantes, l'état de charge des batteries des véhicules disponibles, des statistiques obtenues à partir de réservations antérieures, etc., un véhicule apte à réaliser telle ou telle mission. Un message de consigne définissant un plan de mission est alors envoyé vers ce véhicule, via le module 1.

Le module 2 peut en outre émettre des messages de consigne à destination des véhicules non sélectionnés, par exemple pour envoyer ces véhicules vers une station de recharge. Les messages de consigne émis comportent alors une adresse de destination correspondant à la station de recharge la plus proche du véhicule destinataire du message. Ces messages sont reçus par le module 1, puis retransmis vers les véhicules 4.

Le module de gestion de flotte peut être programmé de façon à définir des sessions pour des personnes autorisées, dites gestionnaires de gestion de flotte.

Les gestionnaires de flotte se connectent et ouvrent une session par Internet. Une fois connectés, les gestionnaires de flottes peuvent accéder aux différents services proposés :
- gestion des réservations des utilisateurs
- gestion de la maintenance des véhicules,
- gestion de la recharge des véhicules,
- contrôle du statut des véhicules,
- contrôle du déroulement des missions des véhicules et de l'usage correct en accord avec les missions spécifiées.

Le dispositif de contrôle peut être agencé de façon à autoriser certaines actions aux gestionnaires de flotte, notamment autoriser, annuler ou changer une réservation d'un véhicule autonome, remplacer un véhicule autonome par un autre véhicule pour une mission donnée, planifier les opérations de maintenance sur les véhicules autonomes, gérer la recharge des véhicules, activer ou désactiver le mode de conduite automatique dans certaines conditions, ou autre.

Les gestionnaires de flotte reçoivent l'information des situations d'urgence par téléphone directement de l'utilisateur, ou bien par un message, par exemple un courriel ou un SMS (de l'anglais « short message service ») émis par le module de surveillance 1 en cas de problème détecté sur un véhicule autonome. On peut prévoir de créer un numéro de téléphone spécifique pour gérer les situations d'urgence utilisateurs.

L'information est prise en compte par les gestionnaires de flotte qui peuvent alors définir un plan d'action approprié, par exemple envoyer un technicien à l'endroit défini par des données de navigation reçues du véhicule. Si le problème concerne une réservation, les gestionnaires de flotte peuvent se connecter et ouvrir une session afin de mener l'action nécessaire, par exemple une annulation, un retour à l'endroit spécifique ou autre.

On peut prévoir que pendant les opérations de maintenance, le véhicule autonome soit indisponible pour la réservation. La réservation de l'opération de maintenance peut être enregistrée avec un numéro d'identifiant comme une réservation utilisateur.

### Véhicule autonome

Le véhicule autonome 4 est un véhicule de série électrique ayant des fonctions qui lui permettent de se déplacer de façon autonome. Le véhicule autonome 1 comporte plusieurs modules non représentés qui assurent des fonctions de navigation autonome telles que la perception, la localisation, la mission, le planificateur de trajectoire, la commande du véhicule, la supervision des processus et des communications.

Le véhicule autonome 4 est en communication avec le module de supervision 1. Le véhicule autonome 4 reçoit par une transmission sans fil la définition d'un plan de mission qui contient une date et une adresse de départ de mission, le statut des trajectoires prédéfinies, une identification de l'utilisateur prévu.

Le module de gestion de flotte 2 permet normalement d'assurer l'adéquation entre le niveau de charge de batterie du véhicule autonome 4 et la mission à réaliser. Ainsi, avant de réaliser une mission, le véhicule 4 dispose de toute la charge de batterie nécessaire à cette réalisation.

Sur sa base de stationnement, le véhicule fonctionne en mode autonome. Dans les autres zones où le véhicule évolue, ainsi que sur le site après la réception du plan de mission, le véhicule autonome 4 entre dans un mode autonome.

Des vérifications internes sont effectuées, notamment les capteurs principaux sont testés. Le véhicule informe le dispositif de contrôle qu'il est prêt à démarrer sa mission.

Le véhicule 4 se déplace vers l'adresse de départ. Le véhicule 4 peut interagir avec une porte de parking afin de l'ouvrir et quitter le parking. Le véhicule 4 se dirige vers le point de rendez-vous en mode automatique suivant des chemins prédéfinis. La vitesse du véhicule est limitée en tenant compte des contraintes imposées par des données de la carte de navigation ou les consignes du module de surveillance 1. Les informations concernant la vitesse, la position ou un événement particulier sont transmises du véhicule autonome 4 vers le module de surveillance 1, et ce de façon périodique, et par une communication sans fil.

Si des obstacles se trouvent sur la trajectoire définie, les capteurs embarqués dans le véhicule communiquent une information à des moyens de traitement destinés à la conduite intégrée au véhicule. Ces moyens de traitement, par exemple des processeurs, déterminent une trajectoire d'évitement afin d'éviter la collision avec l'obstacle.

Lorsque les moyens de calcul du véhicule 4 n'arrivent pas à déterminer une trajectoire d'évitement à partir des informations reçues des capteurs embarqués, des informations sont reçus du module de surveillance 1, ces informations étant par exemple issues de caméras de surveillance non représentées, ou autre.

Le module de surveillance 1 peut aussi imposer au véhicule autonome 4 un arrêt jusqu'à ce que l'obstacle disparaisse.

Lorsque le véhicule 4 est à proximité du point de rendez-vous, l'utilisateur est informé de son arrivée, par exemple par courriel ou SMS sur son terminal.

Si après un certain délai, aucune identification n'est enregistrée, le véhicule 4 envoie une deuxième notification à l'utilisateur. Si l'utilisateur n'apparaît toujours pas, la mission est annulée et le véhicule autonome 4 se place dans un état d'attente d'une nouvelle mission.

Si, au point de rendez-vous choisi, l'utilisateur s'identifie auprès du véhicule et que l'identification est validée, le véhicule permet à l'utilisateur l'accès au véhicule. A l'intérieur du véhicule, l'utilisateur prend la responsabilité du véhicule. Le véhicule passe donc d'un mode de fonctionnement automatique à un mode de fonctionnement manuel. Dit autrement, c'est l'utilisateur qui conduit le véhicule.

Lorsque l'utilisateur a fini sa mission, l'utilisateur conduit le véhicule à un point de rendez-vous à l'intérieur du site et libère le véhicule. L'utilisateur ferme par la suite sa cession d'utilisation du véhicule, et une fois au dehors se déconnecte seulement s'il n'y a personne dans le véhicule.

Le véhicule commute alors vers son mode autonome. Tous ces composants sont vérifiés et des données relatives à cette transition sont envoyées au module de surveillance 1.

Le véhicule se déplace vers la place de parking ou vers un point de rendez-vous différent en suivant les instructions envoyées par le module de surveillance 1. Une fois le véhicule arrivé à la place de parking, le véhicule est dirigé soit vers un point de recharge, soit vers une place de parking, en fonction d'instructions reçues du module de surveillance 1.

Si un véhicule 4 nécessite une recharge, une routine spéciale est mise en place afin d'effectuer cette recharge.

Le système d'interaction utilisateur 3 peut comporter par exemple un serveur avec une base de données, de façon à permettre aux utilisateurs autorisés de faire la réservation des véhicules autonomes pour des déplacements à l'extérieur de la zone restreinte, et dans la portée des véhicules électriques.

Le système 3 est également agencé pour gérer l'interaction entre le véhicule 4 et l'utilisateur, la prise en mains et la relégation du véhicule.

L'utilisateur se connecte et s'identifie via Intranet ou Internet. Une fois connecté l'utilisateur demande une réservation pour une mission aller-retour. L'utilisateur doit saisir certaines données, comme une destination, un nombre de passagers, une heure et un point de rendez-vous à desservir, ainsi que la date et l'heure estimée du retour.

Le gestionnaire de flotte utilise ces informations pour vérifier si un véhicule avec le niveau souhaité d'autonomie est disponible.

Dans un mode de réalisation, tout utilisateur a été préenregistré en incluant ses coordonnées téléphoniques pour le contacter concernant sa réservation.

Quand un véhicule est identifié par le gestionnaire de la flotte, une liste de points de rencontre est proposée à l'utilisateur qui doit en choisir un. Après ce choix, le serveur définit et affiche un numéro d'identifiant de réservation qui sera transmis également à l'utilisateur par téléphone portable et par courriel. Le processus de réservation est clôturé.

Avec cet identifiant, l'utilisateur a la possibilité d'annuler ou de modifier sa réservation, de changer le point de rencontre, l'heure, la date, ou autre.

Lorsque le véhicule est à la proximité de du point de rencontre défini, l'utilisateur reçoit un message par exemple un SMS, pour lui rappeler la réservation, le point de rencontre et l'heure. Quant le véhicule autonome arrive au point de rencontre, un deuxième message du type SMS est envoyé à l'utilisateur pour confirmer son arrivée.

En cas de difficulté rencontrée par le véhicule pour arriver au point de rencontre, l'utilisateur est informé du retard par un message. Après l'arrivée du véhicule autonome au point de rencontre, si l'utilisateur n'arrive pas après un certain délai, il reçoit une notification d'annulation de réservation. Le véhicule est prêt à recevoir une nouvelle mission.

Si l'utilisateur est effectivement présent, le véhicule reçoit des données d'identifications saisies par l'utilisateur et procède à une authentification. Le véhicule peut alors autoriser une ouverture des portes pour permettre l'accès à bord.

Une fois à l'intérieur, l'utilisateur effectue une action de validation manuelle et prend la responsabilité complète du véhicule. Le véhicule bascule donc en mode manuel. L'utilisateur est informé de ce changement et du fait que le contrôle du véhicule lui appartient complètement.

L'utilisateur peut alors conduire le véhicule à l'intérieur ou à l'extérieur du site.

A son retour au site, l'utilisateur gare le véhicule à un des points de rencontre proposés, selon son choix. La fin de la mission est signalée en s'identifiant une fois hors du véhicule. L'utilisateur revalide la relégation du véhicule et l'absence de personnes dans la cabine.

Le véhicule attend l'autorisation du module de supervision de basculer en mode autonome. Le module de supervision 1 envoi un message d'autorisation de basculement en mode autonome, puis commande au véhicule 4 un déplacement vers le parking ou vers un site de recharge de batterie, ou éventuellement vers une nouvelle mission.

L'invention peut ainsi trouver une application dans les services de type voiturier. Les voitures autonomes peuvent être disponibles sur un site fermé ou ouvert. On peut prévoir que le dispositif de contrôle soit apte à communiquer avec les véhicules présents sur le site, et que lorsqu'un utilisateur conduit le véhicule, il soit autorisé à effectuer des déplacements à l'extérieur du site. Le site peut par exemple être un site d'une entreprise ou bien encore un site d'un loueur de voitures. Le dispositif de contrôle permet ainsi de superviser toutes les opérations de préparation du véhicule avant de remettre ce véhicule au client, et de récupérer toutes les opérations de vérification, nettoyage etc. à la fin, une fois la mission réalisée.

Dans un autre mode de réalisation, on peut prévoir que les véhicules autonomes soient destinés à rester à l'intérieur du site.

L'invention peut ainsi permettre une mise à disposition automatisée et un parking automatisé en fin de mission pour des flottes de véhicules en libre service avec optimisation de la surface de parking.

L'invention peut en outre permettre un service automatisé de recharge, par exemple, par induction ou toute autre technologie automatisée, ce service pouvant notamment permettre de faire passer les véhicules pendant la nuit sur les bornes de recharge pour la seule durée nécessaire à la recharge programmée, et éventuellement de réduire le nombre de stations de recharge.

L'invention peut en outre trouver une application dans le déplacement des personnes à activité réduites, non voyantes, dépendantes et/ou autre, notamment sur des sites avec des frontières définies du type lotissement pour personnes âgées.

L'invention permet en outre de rééquilibrer de façon automatique ou semi-automatique des volumes de véhicules des différentes zones de parking en libre service.

L'invention peut en outre être appliquée sur tout véhicule homologué pour roulage sur route.

## Revendications

1. Procédé de contrôle d'au moins un véhicule terrestre autonome apte à adopter deux modes de fonctionnement, lesdits modes comprenant
- un mode manuel, dans lequel la conduite est fonction de commandes conducteur du véhicule,
- un mode autonome, dans lequel la conduite est fonction de données reçues de capteurs aptes à fournir des informations sur l'environnement du véhicule et de données reçues d'un système de navigation, le procédé comprenant les étapes consistant à :
- autoriser le mode autonome seulement lorsque le véhicule se trouve dans un site déterminé par des frontières définies,
- transmettre vers le véhicule un message de consigne afin que ledit véhicule réalise de façon autonome un déplacement correspondant au message de consigne transmis,
**caractérisé en ce que** le procédé comprend une étape consistant à recevoir des données de réservation issues d'une interface utilisateur et **en ce que** le message de consigne à transmettre au véhicule est élaboré en fonction de données de réservation reçues, le message de consigne comportant une adresse de destination et/ou une date de déplacement.

2. Procédé selon la revendication 1, dans lequel des informations comprenant un état de charge de batterie, permettent d'imposer au véhicule de se rendre à une borne de recharge.

3. Procédé selon l'une des revendications 1 à 2, dans lequel le message transmis comporte des informations concernant l'utilisateur du véhicule.

4. Procédé selon l'une des revendications 1 à 3, dans lequel le message transmis comporte des informations concernant un profil de circuit à traverser par le véhicule en mode autonome.

5. Procédé selon l'une des revendications 1 à 4, comprenant, pour un véhicule autonome des étapes consistant à :
- détecter un éventuel dysfonctionnement du véhicule, et
- émettre un signal d'alarme en cas de détection de dysfonctionnement.

6. Procédé selon l'une des revendications 1 à 5, comprenant en outre des étapes consistant à :
- recevoir au moins une information d'état du véhicule autonome, et
- élaborer le message de consigne à transmettre au véhicule en fonction de ladite au moins une information d'état reçue.

7. Procédé selon la revendication 6, comprenant en outre une étape consistant à :
- stocker en mémoire des informations d'état du véhicule relevées suite à l'étape de réception.

8. Procédé selon l'une des revendications 1 à 7, dans lequel l'étape de transmission est effectuée pour chaque véhicule autonome d'un ensemble de véhicules autonomes, le procédé comprenant en outre une étape consistant à:
- estimer une répartition spatiale souhaitée de l'ensemble de véhicules autonomes, le message de consigne à transmettre au véhicule étant élaboré en fonction de ladite répartition estimée.

9. Produit programme d'ordinateur comportant des instructions pour effectuer les étapes du procédé selon l'une des revendications précédentes lorsque le programme est exécuté par un processeur.

10. Dispositif de contrôle (1, 2) d'au moins un véhicule autonome (4) d'une pluralité de véhicules autonomes, chaque véhicule autonome étant apte à adopter deux modes de fonctionnement, lesdits modes comprenant
- un mode manuel, dans lequel la conduite est fonction de commandes conducteur du véhicule,
- un mode autonome, dans lequel la conduite est fonction de données reçues de capteurs aptes à fournir des informations sur l'environnement du véhicule et de données reçues d'un système de navigation,
le dispositif comprenant :
- des moyens de traitement pour autoriser le mode autonome seulement lorsque l'au moins un véhicule se trouve dans un site déterminé par des frontières définies,
- un module de supervision (1) pour transmettre des messages de consigne vers au moins un véhicule de la pluralité de véhicules afin que ledit véhicule réalise de façon autonome un déplacement correspondant au message de consigne transmis, et pour assister les véhicules de la pluralité de véhicules dans leurs déplacements lorsque lesdits véhicules sont en mode autonome,
**caractérisé en ce que** le dispositif comprend :
- des moyens de communication avec une interface utilisateur (3) pour recevoir des données de réservation issues de ladite interface utilisateur,
- un module de gestion de flotte (2) en communication avec le module de supervision (1) et avec les moyens de communication pour assurer la maintenance des véhicules de la pluralité de véhicules et pour optimiser la répartition spatiale des véhicules de la pluralité de véhicules sur le site.

11. Dispositif de contrôle selon la revendication 10, dans lequel le module de supervision (1) permet à un observateur de déplacer le véhicule autonome à distance.

12. Dispositif de contrôle selon l'une des revendications 10 ou 11, dans lequel le module de supervision (1) est équipé pour signaler à distance une présence de véhicule de service d'urgence à proximité du véhicule autonome.

13. Dispositif de contrôle selon l'une des revendications 10 à 12, dans lequel le module de supervision (1) est équipé pour signaler à distance une présence d'obstacle obstruant le trajet à parcourir par le véhicule en mode autonome.

14. Dispositif de contrôle selon l'une des revendications 10 à 13, agencé pour gérer plus d'autres véhicules d'un parc donné en plus du véhicule autonome, et/ou des équipements du site en communication avec le dispositif de contrôle, comprenant des capteurs installés sur le site constituant un écosystème.

## Patentansprüche

1. Verfahren zur Steuerung wenigstens eines autonomen Landfahrzeugs, das in der Lage ist, in zwei Betriebsarten zu arbeiten, wobei diese Betriebsarten umfassen:
- eine manuelle Betriebsart, in welcher die Fahrweise von Befehlen des Führers des Fahrzeugs abhängig ist,
- eine autonome Betriebsart, in welcher die Fahrweise von Daten, die von Sensoren empfangen werden, die in der Lage sind, Informationen über die Umgebung des Fahrzeugs zu liefern, und von Daten, die von einem Navigationssystem empfangen werden, abhängig ist,
wobei das Verfahren die folgenden Schritte umfasst:
- Zulassen der autonomen Betriebsart nur dann, wenn sich das Fahrzeug auf einem Gelände befindet, das durch definierte Grenzen bestimmt ist,
- Übertragen einer Anweisungsnachricht zum Fahrzeug, damit das Fahrzeug auf autonome Weise eine Fahrt durchführt, die der übertragenen Anweisungsnachricht entspricht,
**dadurch gekennzeichnet, dass** das Fahrzeug einen Schritt umfasst, der darin besteht, Reservierungsdaten zu empfangen, die von einer Benutzerschnittstelle stammen, und dadurch, dass die zum Fahrzeug zu übertragende Anweisungsnachricht in Abhängigkeit von empfangenen Reservierungsdaten erstellt wird, wobei die Anweisungsnachricht eine Zieladresse und/oder ein Fahrtdatum umfasst.

2. Verfahren nach Anspruch 1, wobei Informationen, die einen Batterieladezustand umfassen, es ermöglichen, dem Fahrzeug vorzuschreiben, sich zu einer Ladestation zu begeben.

3. Verfahren nach einem der Ansprüche 1 bis 2, wobei die übertragene Nachricht Informationen umfasst, die den Benutzer des Fahrzeugs betreffen.

4. Verfahren nach einem der Ansprüche 1 bis 3, wobei die übertragene Nachricht Informationen umfasst, die ein Profil der Strecke betreffen, die von dem Fahrzeug in der autonomen Betriebsart zurückgelegt werden soll.

5. Verfahren nach einem der Ansprüche 1 bis 4, welches für ein autonomes Fahrzeug Schritte umfasst zum:
- Erkennen einer eventuellen Betriebsstörung des Fahrzeugs, und
- Senden eines Alarmsignals im Falle der Erkennung einer Betriebsstörung des Fahrzeugs.

6. Verfahren nach einem der Ansprüche 1 bis 5, welches außerdem Schritte umfasst zum:
- Empfangen wenigstens einer Zustandsinformation des autonomen Fahrzeugs, und
- Erstellen der zum Fahrzeug zu übertragenden Anweisungsnachricht in Abhängigkeit von der empfangenen wenigstens einen Zustandsinformation.

7. Verfahren nach Anspruch 6, welches außerdem einen Schritt umfasst zum:
- Speichern der gewonnenen Zustandsinformationen des Fahrzeugs in einem Speicher im Anschluss an den Schritt des Empfangens.

8. Verfahren nach einem der Ansprüche 1 bis 7, wobei der Schritt des Übertragens für jedes autonome Fahrzeug einer Gesamtheit von autonomen Fahrzeugen durchgeführt wird, wobei das Verfahren außerdem einen Schritt umfasst zum:
- Schätzen einer gewünschten räumlichen Verteilung der Gesamtheit von autonomen Fahrzeugen, wobei die zum Fahrzeug zu übertragende Anweisungsnachricht in Abhängigkeit von der geschätzten Verteilung erstellt wird.

9. Computerprogrammprodukt, welches Anweisungen zur Durchführung der Schritte des Verfahrens nach einem der vorhergehenden Ansprüche, wenn das Programm von einem Prozessor ausgeführt wird, umfasst.

10. Vorrichtung zur Steuerung (1, 2) wenigstens eines autonomen Fahrzeugs (4) einer Vielzahl von autonomen Fahrzeugen, wobei jedes autonome Fahrzeug in der Lage ist, in zwei Betriebsarten zu arbeiten, wobei diese Betriebsarten umfassen:
- eine manuelle Betriebsart, in welcher die Fahrweise von Befehlen des Führers des Fahrzeugs abhängig ist,
- eine autonome Betriebsart, in welcher die Fahrweise von Daten, die von Sensoren empfangen werden, die in der Lage sind, Informationen über die Umgebung des Fahrzeugs zu liefern, und von Daten, die von einem Navigationssystem empfangen werden, abhängig ist,
wobei die Vorrichtung umfasst:
- Verarbeitungsmittel, um die autonome Betriebsart nur dann zuzulassen, wenn sich das wenigstens eine Fahrzeug auf einem Gelände befindet, das durch definierte Grenzen bestimmt ist,
- ein Überwachungsmodul (1) zum Übertragen von Anweisungsnachrichten zu wenigstens einem Fahrzeug der Vielzahl von Fahrzeugen, damit dieses Fahrzeug auf autonome Weise eine Fahrt durchführt, die der übertragenen Anweisungsnachricht entspricht, und zum Unterstützen der Fahrzeuge der Vielzahl von Fahrzeugen bei ihren Fahrten, wenn sich diese Fahrzeuge in der autonomen Betriebsart befinden, **dadurch gekennzeichnet, dass** die Vorrichtung umfasst:
- Mittel zur Kommunikation mit einer Benutzerschnittstelle (3), um Reservierungsdaten zu empfangen, die von der Benutzerschnittstelle stammen,
- ein Flottenmanagement-Modul (2), das mit dem Überwachungsmodul (1) und mit den Mitteln zur Kommunikation in Kommunikation steht, um die Wartung der Fahrzeuge der Vielzahl von Fahrzeugen sicherzustellen und um die räumliche Verteilung der Fahrzeuge der Vielzahl von Fahrzeugen auf dem Gelände zu optimieren.

11. Vorrichtung zur Steuerung nach Anspruch 10, wobei das Überwachungsmodul (1) einem Beobachter ermöglicht, das autonome Fahrzeug per Fernsteuerung zu fahren.

12. Vorrichtung zur Steuerung nach einem der Ansprüche 10 oder 11, wobei das Überwachungsmodul (1) für eine Fernsignalisierung eines Vorhandenseins eines Notdienstfahrzeugs in der Nähe des autonomen Fahrzeugs ausgelegt ist.

13. Vorrichtung zur Steuerung nach einem der Ansprüche 10 bis 12, wobei das Überwachungsmodul (1) für eine Fernsignalisierung eines Vorhandenseins eines Hindernisses ausgelegt ist, das den von dem Fahrzeug in der autonomen Betriebsart zurückzulegenden Weg versperrt.

14. Vorrichtung zur Steuerung nach einem der Ansprüche 10 bis 13, die dazu eingerichtet ist, weitere andere Fahrzeuge eines gegebenen Parks zusätzlich zu dem autonomen Fahrzeug zu managen, und/oder Einrichtungen des Geländes, die mit der Vorrichtung zur Steuerung in Kommunikation stehen, darunter auf dem Gelände installierte Sensoren, die ein Ökosystem bilden.

## Claims

1. Method of control of at least one autonomous terrestrial vehicle able to adopt two modes of operation, said modes comprising
- a manual mode, in which driving is dependent on vehicle driver commands,
- an autonomous mode, in which driving is dependent on data received from sensors able to provide information about the environment of the vehicle and on data received from a navigation system,
the method comprising the steps consisting in:
- authorizing the autonomous mode only when the vehicle is situated in a site determined by defined boundaries,
- transmitting a directive message to the vehicle so that said vehicle carries out in an autonomous manner a movement corresponding to the directive message transmitted, **characterized in that** the method comprises a step consisting in receiving booking data arising from a user interface and **in that** the directive message to be transmitted to the vehicle is formulated as a function of the booking data received, the directive message comprising a destination address and/or a movement date.

2. Method according to Claim 1, in which information comprising a battery state of charge makes it possible to oblige the vehicle to go to a recharging facility.

3. Method according to one of Claims 1 to 2, in which the message transmitted comprises information relating to the user of the vehicle.

4. Method according to one of Claims 1 to 3, in which the message transmitted comprises information relating to a profile of circuit to be traveled by the vehicle in autonomous mode.

5. Method according to one of Claims 1 to 4, comprising, for an autonomous vehicle, steps consisting in:
- detecting a possible malfunction of the vehicle, and
- emitting an alarm signal in case of detection of malfunction.

6. Method according to one of Claims 1 to 5, furthermore comprising steps consisting in:
- receiving at least one item of state information in respect of the autonomous vehicle, and
- formulating the directive message to be transmitted to the vehicle as a function of said at least one item of state information received.

7. Method according to Claim 6, furthermore comprising a step consisting in:
- storing in memory vehicle state information logged subsequent to the receiving step.

8. Method according to one of Claims 1 to 7, in which the transmitting step is performed for each autonomous vehicle of an assembly of autonomous vehicles, the method furthermore comprising a step consisting in:
- estimating a desired spatial distribution of the assembly of autonomous vehicles, the directive message to be transmitted to the vehicle being formulated as a function of said estimated distribution.

9. Computer program product comprising instructions for performing the steps of the method according to one of the preceding claims when the program is executed by a processor.

10. Device (1, 2) for control of at least one autonomous vehicle (4) of a plurality of autonomous vehicles, each autonomous vehicle being
able to adopt two modes of operation, said modes comprising
- a manual mode, in which driving is dependent on vehicle driver commands,
- an autonomous mode, in which driving is dependent on data received from sensors able to provide information about the environment of the vehicle and on data received from a navigation system,
the device comprising:
- processing means for authorizing the autonomous mode only when the at least one vehicle is situated in a site determined by defined boundaries,
- a supervision module (1) for transmitting directive messages to at least one vehicle of the plurality of vehicles so that said vehicle carries out in an autonomous manner a movement corresponding to the directive message transmitted, and for assisting the vehicles of the plurality of vehicles in their movements when said vehicles are in autonomous mode,
**characterized in that** the device comprises:
- means of communication with a user interface (3) for receiving booking data arising from said user interface,
- a fleet management module (2) in communication with the supervision module (1) and with the communication means for ensuring the maintenance of the vehicles of the plurality of vehicles, and for optimizing the spatial distribution of the vehicles of the plurality of vehicles on the site.

11. Control device according to Claim 10, in which the supervision module (1) allows an observer to move the autonomous vehicle remotely.

12. Control device according to one of Claims 10 or 11, in which the supervision module (1) is equipped for signaling remotely a presence of emergency service vehicle in proximity to the autonomous vehicle.

13. Control device according to one of Claims 10 to 12, in which the supervision module (1) is equipped for signaling remotely a presence of obstacle obstructing the path to be traveled by the vehicle in autonomous mode.

14. Control device according to one of Claims 10 to 13, designed to manage more other vehicles of a given pool in addition to the autonomous vehicle, and/or equipment of the site in communication with the control device, comprising sensors installed on the site constituting an ecosystem.
